# EUROPÄISCHE PATENTANMELDUNG

(11) **EP 4 414 168 A1**
(43) Veröffentlichungstag der Anmeldung: **14.08.2024**
(21) Anmeldenummer: 24155233.0
(22) Anmeldetag: 01.02.2024
(51) Int. Cl.: B32B 15/01, C22C 18/00, C22C 18/04, C23C 2/06, C23C 2/34, C23C 2/04, C23C 2/08

(54) **KALT GEFORMTES BAUTEIL MIT ZN-AL-MG-SN ÜBERZUG**

(30) Priorität: 08.02.2023 DE 102023103033
(71) Anmelder: ThyssenKrupp Steel Europe AG, 47166 Duisburg (DE)
(72) Erfinder: Jafarian Suraki, Niloofar, 44263 Dortmund (DE); Bienholz, Stefan, 44795 Bochum (DE); Stille, Sebastian, 44263 Dortmund (DE)
(74) Vertreter: ThyssenKrupp Steel Europe AG

(57) **Zusammenfassung**

Die Erfindung betrifft ein kalt geformtes Bauteil nach Anspruch 1.

## Beschreibung

Die Erfindung betrifft ein kalt geformtes Bauteil bestehend aus einem Stahlsubstrat mit einem zinkbasierten Überzug, welcher Aluminium zwischen 0,5 und 8,0 Gew.-%, Magnesium zwischen 0,5 und 8,0 Gew.-% und Rest Zink und unvermeidbare Verunreinigungen umfasst, wobei der Überzug ein Gefüge aus Zinkkörnern mit eutektischen Phasen aufweist.

Um einen effektiven Korrosionsschutz bei Kaltumformstählen im Automobilbereich zu gewährleisten, werden Stahlsubstrate klassisch mit einem Zn-basierten Schmelztauchüberzug versehen. Diese bietet einen aktiven Korrosionsschutz, das heißt, dass sich der vergleichsweise unedle Zn-Überzug für das edlere Stahlsubstrat opfert. Neben einer klassischen Feuerverzinkung, kurz "Z" bezeichnet, spielen dabei Zink-Magnesium-Aluminium-Schmelztauchüberzüge, kurz "ZM" bezeichnet, eine immer größere Rolle. Diese bieten gegenüber klassischem Feuerzink Vorteile bezüglich des Korrosionsverhaltens und der Kaltumformbarkeit.

Bei einer herkömmlichen Herstellung von Zn-Mg-AI-Überzügen auf Stahlsubstraten kommt es während und nach dem Einstellen der Überzugsdicke durch Abstreifen des noch schmelzflüssigen Überzugs zur Abkühlung des Überzugs und somit zur Kristallisation. Dabei bilden sich Zinckörner, welche von magnesium- und/oder aluminiumreichen Phasen umgeben sind, vgl. CN 110 983 224 A. Bei der Erstarrung von Zn-Mg-AI-Schmelzen kommt es lokal in unterschiedlichem Maße zwischen, über und unter den primär ausgeschiedenen Zinkkörnern zur Ausbildung von binären (Zink-Magnesium) und/oder ternären (Zink-Aluminium-Magnesium) eutektischen Phasen. Diese eutektischen Phasen sind aus dem Eutektikum und Reinmetallen, d. h. diese eutektischen Phasen weisen neben dem Eutektikum zusätzlich sekundäre Zinkkörner und gegebenenfalls Aluminiumphasen (Aluminiumkörner) auf. Diese sekundären Zinkkörner sind nicht mit den primär ausgeschiedenen Zinkkörnern zu verwechseln, da sie ein im Vergleich zu den primären Zinkkörnern um mehrere Größenordnungen geringeres Volumen aufweisen. Während die primären Zinkkörner einen Durchmesser von teilweise bis 30 µm und sogar darüber aufweisen können, liegt der Durchmesser der in den eutektischen Phasen befindlichen sekundären Zinkkörner bei bis zu 2 µm. Des Weiteren werden diese sekundären Phasen vor oder nach dem Eutektikum ausgeschieden. In der Literatur werden die oben beschriebenen eutektischen Phasen als hypo- oder hyper-eutektischen Phasen bezeichnet, je nachdem ob sie vor oder nach dem Eutektikum ausgeschieden werden. Der Schichtaufbau eines Zn-Mg-Al-Überzugs weist eine nicht flächendeckende, aber über die gesamte Fläche verteilte Anreicherung von eutektischen Phasen auf, die über den Zinkkörner (und gegebenenfalls auch in den Zinkkörnern) angeordnet sein können. Bei dem Eutektikum und den eutektischen Phasen handelt es sich im Wesentlichen um magnesiumreiche Phasen.

Im Allgemeinen bewirkt die Zugabe von Magnesium in die Schmelze und damit wiederrum im Überzug eine Verbesserung der Korrosionsbeständigkeit, sowie einen reduzierten Werkzeugverschleiß während des Umformens. Das verbesserte Korrosionsverhalten wird gemäß dem Stand der Technik auf die Mikrostruktur der eutektischen Phasen im Überzug zurückgeführt. Dabei sind im Wesentlichen dichte eutektische Phasen bestehend aus Zink-, Zink-Magnesium (MgZn₂)- und optional aus Aluminium-Phasen entscheidend, damit die entstehenden magnesiumreichen Phasen eine ebenfalls dichte Sperrschicht bilden und so den weiteren Korrosionsprozess verlangsamen. Eine Vergrößerung des Flächenanteils der dichten eutektischen Phasen auf dem Überzug sorgt dementsprechend für eine Verbesserung der Korrosionsbeständigkeit. Das effizientere Umformverhalten des Zn-Mg-Al-Überzuges ist gemäß dem Stand der Technik noch nicht in Gänze verstanden, es wird jedoch vermutet, dass es auf den veränderten Härteeigenschaften der sich an der Überzugsoberfläche ausbildenden Phasen basiert. Im Vergleich zu den weichen Zinkkörnern sind die im Eutektikum befindlichen intermetallischen Zink-Magnesium (MgZn₂)-Phasen wesentlich härter und dementsprechend resistenter gegenüber Verschleiß.

Durch den Einfluss der Abkühltemperatur kann der Mechanismus des (primären) Zinkkornwachstums verringert werden, vorteilhaft zugunsten einer vermehrten Entstehung der eutektischen Phasen im oberflächennahen Bereich und/oder an der Oberfläche des Überzugs.

An der Oberfläche des Überzugs bildet sich nach dem Schmelztauchbeschichten eine Oxidschicht aus. Diese wirkt für die Weiterbehandlung, insbesondere für die Phosphatierung und Lackierung störend und wird in der Regel vollständig entfernt, insbesondere durch elektrolytische Abtrag-Verfahren. Um nicht zu viel von dem korrosionsbeständigen Überzug abzutragen, kann eine Oxidschichtdickenmessung oder Tiefenprofilmessung beispielsweise mittels Röntgenphotoelektronenspektroskopie durchgeführt werden. Dabei kann die bei der Berechnung der Oxidschichtdicke zugrundeliegende Abtragrate beispielsweise der von Siliziumdioxid auf einem Siliziumwafer entsprechen und die daraus folgenden Parameter im Elektrolyten und die Zusammensetzung des Elektrolyten bedarfsgerecht eingestellt werden. Diese Vorgehensweise ist Stand der Technik.

Im Fokus liegt eine bessere Benetzbarkeit der Oberfläche von ZM-Überzügen, was wiederum signifikante Vorteile bezüglich des Reinigungsverhaltens, der Phosphatierungseignung sowie der Lackhaftung bewirkt.

Die US 2019/003031 A1 beschreibt eine Schmelzbadzusammensetzung mit Al, Mg, Sn und Rest Zn, vgl. Bäder 2 und 3 in Tabelle 1, aber mit dem Ziel einen geeigneten Korrosionsschutzüberzug für die Warmumformung bereit zu stellen, welcher während der Warmumformung geringe Neigung zu Mikrorissen aufweist. Die DE 10 2021 107 873 A1 und DE 10 2021 129 934 A1 beschreiben ZM-Überzüge, in welchen als Verunreinigungen Elemente wie Bismut, Chrom, Blei, Titan, Mangan, Silizium, Kalzium, Zinn, Lanthan, Cer, vorhanden sein können. In der DE 000069936071 T2 und US 2003/0003321 A1 werden Zn-Mg-AI-Si-Legierungsbeschichtungen auf Stahlblech offenbart, die auch Sn enthalten können.

Die Aufgabe der Erfindung ist eine Verbesserung des ZM-Überzugs im Hinblick auf eine hervorragende Benetzbarkeit und eine höhere Langlebigkeit des Überzugs, mithin ein verbesserter Korrosionsschutz im Vergleich zu aus dem Stand der Technik bekannten ZM-Überzügen. Ferner soll durch die erfindungsgemäß zu verwendenden Überzüge eine Erhöhung des Risikos für Umwelt und Gesundheit vermieden werden.

Gelöst wird die Aufgabe in Bezug auf das Bauteil mit den Merkmalen des Patentanspruchs 1. Weitere Ausgestaltungen sind in den Unteransprüchen beschrieben.

Die Lehre sieht vor, ein kalt geformtes Bauteil bestehend aus einem Stahlsubstrat mit einem zinkbasierten Überzug anzugeben, welcher Aluminium zwischen 0,5 und 8,0 Gew.-%, Magnesium zwischen 0,5 und 8,0 Gew.-% und Rest Zink und unvermeidbare Verunreinigungen umfasst, wobei der Überzug ein Gefüge aus Zinkkörnern mit eutektischen Phasen aufweist, wobei im Überzug zusätzlich Zinn zwischen 0,1 und 2,0 Gew.-% enthalten ist.

Die Erfinder haben überraschend festgestellt, dass die Einstellung einer besonderen Ausprägung des Überzugs zu einer signifikanten Verbesserung des Benetzungsverhaltens der Beschichtungsoberfläche bei kalt geformten Bauteilen führt. Durch die gezielte Zugabe von Zinn im Schmelzenbad bei der Erzeugung von zinkbasierten Überzügen auf den Stahlsubstraten, lagert sich Zinn während der Erstarrung des Schmelz-Überzugs im Bereich der eutektischen Phasen, an und führt dort zu einer deutlichen Feinung der lokalen Kornstruktur. Bei den eutektischen Phasen (Mischphasen) kann es sich um binäre und/oder ternäre und/oder mehrkomponentige Eutektika, bevorzugt ausschließlich um binäre und/oder ternäre Eutektika handeln. Diese Körner und/oder Mischphasen reichen dabei insbesondere bis zur Oberfläche des Überzugs, was mit vorteilhaften Eigenschaften des Überzugs, auf welche nachfolgend näher eingegangen wird, neben einem hervorragenden Korrosionsschutz einhergeht.

Zur Verbesserung der vorteilhaften Eigenschaften des Überzugs kann der Überzug Zinn insbesondere mit mindestens 0,2 Gew.-%, 0,3 Gew.-%, 0,4 Gew.-%, vorzugsweise mit mindestens 0,5 Gew.-%, 0,6 Gew.-%, bevorzugt mit mindestens 0,7 Gew.-%, 0,8 Gew.-% aufweisen. Der Zinn-Gehalt ist auf maximal 2 Gew.-% beschränkt, insbesondere auf maximal 1,8 Gew.-%, vorzugsweise auf maximal 1,6 Gew.-%.

Zur Verbesserung des kathodischen Korrosionsschutzes kann der Überzug Magnesium mit einem Gehalt von mindestens 0,8 Gew.-%, insbesondere von mindestens 0,9 Gew.-%, vorzugsweise von mindestens 1,0 Gew.-% und Aluminium mit einem Gehalt von mindestens 0,8 Gew.-%, insbesondere von mindestens 0,9 Gew.-%, vorzugsweise von mindestens 1,0 Gew.-% enthalten. Je nach Anforderung können die Gehalte an Aluminium und Magnesium jeweils insbesondere auf maximal 6,5 Gew.-%, jeweils vorzugsweise auf maximal 5,0 Gew.-%, jeweils bevorzugt auf maximal 3,7 Gew.-% und jeweils besonders bevorzugt auf maximal 5,5 Gew.-% beschränkt sein, um die Solidustemperatur des Eutektikums nicht zu sehr absenken, so dass dies keine nachteilige Auswirkung auf die Prozessführung in der Schmelztauchbeschichtungsanlage hat.

Zink ist mit mindestens 90 Gew.-%, insbesondere mit mindestens 92 Gew.-%, vorzugsweise mit mindestens 94 Gew.-%, bevorzugt mit mindestens 95 Gew.-% im Überzug enthalten.

Zink ist beispielsweise mit maximal 86 Gew.-%, insbesondere mit maximal 84 Gew.-%, vorzugsweise mit maximal 83 Gew.-% in den eutektischen Phasen gebunden. Beispielsweise ist Aluminium mit mindestens dem dreifachen, insbesondere mit mindestens dem vierfachen des absoluten Gehalts an Aluminium im Überzug vertreten ist.

Die genannten Angaben der chemischen Elemente im Überzug entsprechen den absoluten Werten, wobei die einzelnen Elemente in reiner Form und auch als Mischung (Eutektikum) vorliegen. Die quantitative Ermittlung der Elemente kann nach DIN ISO 22309:2015-11 an Punkten oder Bereichen einer Probe mit Hilfe der energiedispersen Spektrometrie (EDS) an vorzugsweise einem Rasterelektronenmikroskop (REM) erfolgen.

Als Verunreinigungen im Schmelzbad respektive im Überzug können Elemente wie Bismut, Zirkon, Nickel, Chrom, Blei, Titan, Mangan, Silizium, Kalzium, Lanthan, Cer, Eisen in Gehalten einzeln oder in Summe bis zu 0,3 Gew.-%, insbesondere bis zu 0,2 Gew.-%, vorzugsweise bis zu 0,1 Gew.-% vorhanden sein. Bevorzugt ist im zinkbasierten Überzug Silizium ausschließlich als Verunreinigung enthalten. In einer Ausführung weist der zinkbasierte Überzug keine primäre kristalline Mg2Si-Phase und/oder keine Si-Phase als primärer Kristall auf. Insbesondere ist der erfindungsgemäß gebildete zinkbasierte Überzug keine Zn-Mg-Al-Si-Legierung. In einer Ausführung weist der zinkbasierte Überzug einen Anteil an Si von kleiner 0,01 Gew.-% auf.

Das Stahlsubstrat wird aus einem Stahlflachprodukt in Bandform oder Blech-/Platinenform bereitgestellt. Es weist eine Längserstreckung (Länge), eine Querstreckung (Breite) sowie eine Höhenerstreckung (Dicke) auf. Das Stahlsubstrat kann ein Warmband (warmgewalztes Stahlband) oder Kaltband (kaltgewalztes Stahlband) sein oder aus einem Warmband oder aus einem Kaltband hergestellt sein. Bevorzugt ist das Stahlflachprodukt ein Kaltband. Nach dem Schmelztauchbeschichten wird das mit dem zinkbasierten Überzug beschichte Stahlsubstrat kalt geformt. Der Formprozess und die entsprechenden Mittel (Werkzeuge) sind Stand der Technik und sind so konzipiert, dass die gewünschten Bauteile erzeugt werden können.

Die Dicke des kalt geformten Bauteils beträgt im Mittel beispielsweise 0,5 bis 5,0 mm, insbesondere 0,6 bis 4,0 mm, vorzugsweise 0,7 bis 3,0 mm.

Das kalt geformte Bauteil wird beispielsweise durch verformte und unverformte Bereiche definiert, welche wiederrum abhängig von der Ausgestaltung des herzustellenden Bauteils sind. Verformte Bereiche an einem Bauteil erfahren eine im Wesentlichen plastische Umformung und lassen sich eindeutig von unverformten Bereichen unterscheiden, was in Fachkreisen bekannt ist.

Das Kaltumformen erfolgt durch an sich bekannte Verfahren wie zum Beispiel Tiefziehen, Biegen und/oder Kanten, was meistens an entsprechenden zugeschnittenen Blechen (Formplatinen) umgesetzt wird, quasi diskontinuierlich. Auch kann das Kaltumformen in sogenannten Rollformprozessen durchgeführt werden, quasi kontinuierlich durch Bereitstellen eines bandförmigen Coils, welches abgezogen, dem Prozess zugeführt und nach Profilierung auf Sollmaß abgelängt wird, insbesondere wenn eine hohe Stückzahl von Profilen mit im Wesentlichen längskonstanten offenen Querschnitt benötigt wird.

Der zinkbasierte Überzug kann eine Dicke zwischen 2 und 60 µm, insbesondere zwischen 4 und 50 µm, vorzugsweise zwischen 5 und 35 µm, aufweisen.

Das mit dem zinkbasierten Überzug beschichtete Stahlsubstrat wird besonders bevorzugt nach dem Beschichtungsprozess respektive vor dem Kaltformen dressiert. Durch das Dressieren wird eine Oberflächenstruktur in den Überzug eingeprägt.

Beispielsweise kann eine deterministische Oberflächenstruktur eingeprägt werden. Unter deterministischer Oberflächenstruktur sind insbesondere regelmäßig wiederkehrende Oberflächenstrukturen zu verstehen, welche eine definierte Form und/oder Ausgestaltung bzw. Dimensionierung aufweisen. Insbesondere gehören hierzu zudem Oberflächenstrukturen mit einer (quasi-)stochastischen Anmutung, die sich aus stochastischen Formelementen mit einer wiederkehrenden Struktur zusammensetzen.

Alternativ ist auch das Einbringen einer stochastischen Oberflächenstruktur denkbar.

Bevorzugt kommen Dressierwalzen zum Einsatz, welche eine Oberfläche mit einer Mittenrauwert Ra zwischen 0,8 und 2,0 µm, insbesondere zwischen 0,9 und 1,8 µm, vorzugsweise zwischen 1,0 und 1,6 µm aufweisen. Auch die Spitzenzahl RPc kann zwischen 50 und 150 1/cm, insbesondere zwischen 55 und 130 1/cm, vorzugsweise zwischen 60 und 110 1/cm betragen. Der Mittenrauwert und die Spitzenzahl lassen sich beispielsweise nach DIN EN 10049:2014-03 ermitteln. Zwar bezieht sich diese Norm auf ein metallisches Flacherzeugnis, aber bei der Betrachtung eines linienförmigen Abschnitts auf der Oberfläche der Dressierwalze parallel zur Längsachse, ist dieser als plan und somit flach zu werten, so dass auch bei Dressierwalzen die genannte Norm zur Anwendung kommen kann. Alternativ kann auch die DIN EN ISO 25178 zur flächenhaften Ermittlung der Oberflächenparameter zur Anwendung kommen.

Die Oberflächenstruktur soll eine Umformhilfe, beispielsweise ein (Umform-)Öl, in seinen Vertiefungen aufnehmen, welches zur Reduzierung des Werkzeugverschleißes infolge einer reduzierten Reibung beim Formen beiträgt.

Die Anwesenheit von Zinn im Überzug hat den Vorteil, dass die Benetzbarkeit von ZM-Überzügen verbessert werden kann, so dass je geringer der Kontaktwinkel, welcher zur Bestimmung der freien Oberflächenenergie einer festen Oberfläche nach DIN EN ISO 19403-2:2020-04 ermittelt werden kann, umso besser das Benetzungsverhalten der Oberfläche des Bauteils, so dass gemäß einer Ausgestaltung das Bauteil einen Kontaktwinkel von weniger als 25°, insbesondere weniger als 22°, vorzugsweise weniger als 20°, bevorzugt weniger als 18° aufweist. Der Kontaktwinkel ist immer > 0°.

Über den nach DIN EN ISO 19403-2:2020-04 ermittelten Kontaktwinkel, insbesondere mit verschiedenen Testflüssigkeiten wie zum Beispiel Ethylenglykol, Diiodmethan und/oder Wasser, lassen sich, vorzugsweise über die Youngsche-Gleichung, die Oberflächenenergie bestimmen und der polare und disperse Anteil der Oberflächenenergie errechnen. Besonders bevorzugt wird der Kontaktwinkel für Ethylenglykol, Diiodmethan und Wasser ermittelt. So weist gemäß einer Ausgestaltung das Bauteil eine Oberflächenenergie von mindestens 60 mN/m und einen polaren Anteil an der Oberflächenenergie mit mindestens 20 % auf. Insbesondere kann die Oberflächenenergie mindestens 63 mN/m, vorzugsweise mindestens 66 mN/m, bevorzugt mindestens 68 mN/m, besonders bevorzugt mindestens 70 mN/m betragen. Die Oberflächenenergie kann bis zu 150 mN/m oder mehr betragen. Der polare Anteil der Oberflächenenergie kann insbesondere mindestens 25 %, vorzugsweise mindestens 25 %, bevorzugt mindestens 27 %, besonders bevorzugt mindestens 30 % betragen. Der polare Anteil der Oberflächenenergie kann bis zu 90 %, insbesondere bis zu 80 %, vorzugsweise bis zu 70 % betragen. Mit steigender Oberflächenenergie und optional Zunahme des polaren Anteils der Oberflächenenergie ist eine verbesserte Benetzbarkeit hinsichtlich Phosphatier- und Lackierbarkeit gegeben.

Die Oberfläche des Bauteils respektive der zu untersuchenden Probe sollte vor der Durchführung der DIN EN ISO 19403-2:2020-04 insbesondere einer alkalischen Entfettung und/oder Reinigung, welche mit im Automobilbau üblichen Verfahren durchgeführt werden kann, unterzogen werden. Ein Beispiel wird in dem nachfolgenden Ausführungsbeispiel genannt. In Fachkreisen sind derartige Verfahren jedoch geläufig und kommen zur Anwendung, da sie zum Standardprozess vor einer Lackierung, beispielsweise bei einer KTL, zur Entfettung, Reinigung und Aktivierung der (zusammengebauten) Bauteile einer Karosserie gehören.

Weitere Vorteile können durch elektrochemische Charakterisierung des Bauteils beschrieben werden, insbesondere ohne eine Vorbehandlung der (zu untersuchenden) Oberfläche des Bauteils, wie zuvor beschrieben, durch Entfettung und/oder Reinigung durchzuführen.

Gemäß einer Ausgestaltung weist das Bauteil ein Ruhepotential von gleich oder weniger als - 0,795 V (vs. SHE), insbesondere von gleich oder weniger als -0,798 V (vs. SHE), vorzugsweise von gleich oder weniger als -0,80 V (vs. SHE) auf. Das Ruhepotential kann bis zu -1,0 V (vs. SHE) betragen oder niedriger sein. Ermittelt wird das Ruhepotential nach DIN 50918:2018-09.

Gemäß einer Ausgestaltung weist das Bauteil ein Korrosionspotential von gleich oder weniger als -0,80 V (vs. SHE), insbesondere von gleich oder weniger als -0,810 V (vs. SHE), vorzugsweise von gleich oder weniger als -0,815 V (vs. SHE) auf. Das Korrosionspotential kann bis zu -1,0 V (vs. SHE) betragen oder niedriger sein. Ermittelt wird das Korrosionspotential nach DIN 50918:2018-09.

Der Zusatz "SHE" kennzeichnet Elektrodenpotentiale, die bezüglich der Standard-Wasserstoff-Elektrode angegeben sind. Insbesondere erfolgt die Ermittlung des Korrosionspotentials und des Ruhepotentials in einem 0,1 mol/l Na₂SO₄-Elektrolyten, mit einem pH-Wert zwischen 4 und 6, vorzugsweise einem pH-Wert von 5,8.

Das zur Anwendung kommende Stahlsubstrat besteht aus einem Stahlwerkstoff, welcher in der Norm DIN EN 10346 beschrieben ist. Vorzugsweise handelt es dabei um einen Mehrphasen-, IF-, BH- oder mikrolegierten Stahl.

Gegenstand der Erfindung ist die Verwendung des oben beschriebenen Bauteils im Automobilbau, insbesondere in der Karosserie eines Automobils, bevorzugt als Außenhaut eines Automobils.

Gegenstand der Erfindung ist ferner die Verwendung von Sn in einem Zink-Magnesium-Aluminium-Schmelztauchüberzug zur Verbesserung der Benetzbarkeit der Oberfläche von ZM-Überzügen, insbesondere der Beschichtungsoberfläche von kalt geformten Bauteilen.

Weiterer Gegenstand ist die Verwendung eines ZM-Überzugs enthaltend Sn wie oben angegeben zur Verbesserung des Reinigungsverhaltens, der Phosphatierungseignung sowie der Lackhaftung der Oberfläche eines kalt geformten Bauteils, wie oben beschrieben.

Im Folgenden werden konkrete Ausgestaltungen der Erfindung im Detail näher erläutert.

Mittels eines Schmelztauchsimulators können großtechnisch angewandte Schmelztauchverfahren im Labormaßstab nachgestellt werden. So kam im Schmelztauchsimulator lwatani HDPS V als Stahlsubstrat eine Güte DC04 mit einer Dicke von 0,7 mm zur Anwendung, wobei 2 Versuche mit unterschiedlichen Schmelzbadzusammensetzen durchgeführt wurden. Die Stahlsubstrate wurden bei 800°C für 70 s in einer inerten Atmosphäre mit einem Taupunkt von -30° geglüht, anschließend abgekühlt und durch das Schmelzenbad geführt. Es wurden zwei unterschiedliche ZM-Überzüge mit und ohne Sn erzeugt, wobei die Zusammensetzung der erstarrten Überzüge in Tabelle 1 aufgeführt ist.

**Tabelle 1**

| | **Zn [%]** | **Mg [%]** | **Al [%]** | **Sn [%]** | **Verunreinigung [%]** | **erf** |
|---|---|---|---|---|---|---|
| I | 97,3 | 1,12 | 1,58 | - | Fe: 0,008 | n |
| II | 96,3 | 1,09 | 1,5 | 1,0 | Fe: 0,015 | j |

Das Abstreifen erfolgte an Luftatmosphäre und als gasförmiges Abstreifgas kam ein Stickstoff-Luftgemisch mit einem Volumenverhältnis 30:70 zum Abstreifen zur Anwendung. Die Dicke des Überzugs im erstarrten Zustand betrug bei I ca. 8 µm und bei II ca. 7 µm, ermittelt mittels Fischerscope-Xray nach DIN EN ISO 3497:2001-12. Aus den beiden unterschiedlich ZM-beschichteten Stahlsubstraten wurden mehrere Proben abgeschnitten, kalt geformt und sowohl die verformten als auch die unverformten Bereiche weiter untersucht. Die weiteren folgend aufgeführten Ergebnisse beziehen sich auf die unverformten Bereiche, wobei die verformten Bereiche tendenziell vergleichbare Ergebnisse aufwiesen.

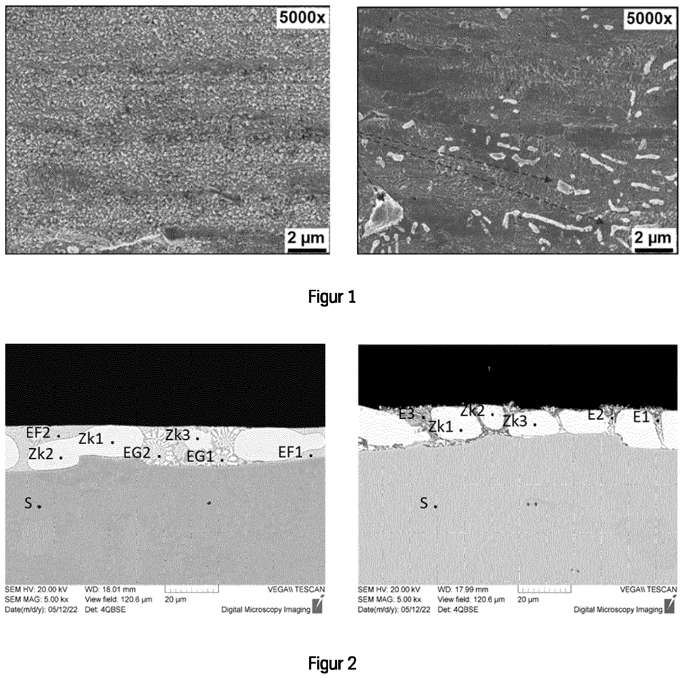

Die Ermittlung der Zusammensetzung des Überzugs erfolgte nach DIN ISO 22309:2015-11 mit dem EDAX Octan Elect Plus (EDS) in Verbindung mit einem Zeiss Merlin (REM) mit der TEAM-Software 4.5. **Figur 1** zeigt links eine REM-Darstellung der untersuchten Probe I und rechts eine REM-Darstellung der untersuchten Probe II. Eindeutig ist die Anwesenheit des Zinns in der rechten Darstellung als helle Flecken zu erkennen.

**Figur 2** zeigt REM-(Teil-)Aufnahmen von im Querschnitt (im senkrechten Anschliff nach Ätzen mit 3%ger HNO₃) erfassten Proben. Diese REM-Aufnahme erfolgten in einem Gerät der Fa. Tescan Vega. Die entsprechende Auflösung und verwendeten Parameter sind in der Figur 2 angegeben. Die linke Darstellung zeigt einen Ausschnitt der untersuchten Probe I und die rechte Darstellung der untersuchten Probe II. Die Querschnittsansicht zeigt des Weiteren die Einflussnahme des Zinns auf die Ausbildung der eutektischen Phasen, welche feiner in der rechten im Vergleich zur linken Darstellung zwischen den primären Zinkkörnern ausgebildet sind.

Des Weiteren sind in Figur 2 Messpunkte dargestellt, in welchen die genaue Zusammensetzung mittels EDS nach DIN ISO 22309:2015-11 ermittelt worden ist. In Tabelle 2 sind die erfassten Zusammensetzungen für die Probe I und in Tabelle 3 die erfassten Zusammensetzungen für die Probe II aufgeführt.

**Tabelle 2**

| | **Zn [%]** | **Mg [%]** | **Al [%]** | **Fe [%]** |
|---|---|---|---|---|
| Zk1 | 97,3 | | 0,7 | 2,0 |
| Zk2 | 96,6 | | 0,8 | 2,6 |
| Zk3 | 97,2 | | 0,8 | 2,0 |
| EF1 | 88,0 | 4,2 | 4,5 | 5,5 |
| EF2 | 88,9 | 4,1 | 5,7 | 1,5 |
| EG1 | 88,4 | 5,8 | 3,1 | 2,7 |
| EG2 | 89,3 | 6,1 | 1,8 | 2,8 |

**Tabelle 3**

| | **Zn [%]** | **Mg [%]** | **Al [%]** | **Fe [%]** | **Sn [%]** |
|---|---|---|---|---|---|
| Zk1 | 97,3 | | 0,8 | 1,9 | |
| Zk2 | 97,0 | | 0,8 | 2,2 | |
| Zk3 | 95,9 | | 0,7 | 3,4 | |
| E1 | 80,1 | 4,5 | 12,7 | 1,7 | 1,2 |
| E2 | 80,0 | 7,3 | 8,7 | 1,5 | 2,5 |
| E3 | 82,6 | 6,8 | 7,6 | 1,4 | 1,6 |

Die Kürzel in Spalte 1 der Tabellen 2 und 3 stehen für: "Zk" Zinkkorn, "E" Eutektikum, "EF" feines Eutektikum und "EG" grobes Eutektikum. Gut zu erkennen ist, dass die eutektischen Phasen bei einer Zugabe von Zinn weniger Zink binden, somit das Zink zu einem verbesserten Korrosionsschutz beitragen kann.

Des Weiteren wurden weitere Messungen nach DIN EN ISO 19403-2:2020-04 an den Proben I und II in dem statischen Kontaktwinkelmessgerät DSA100 der Fa. Kruess durchgeführt. Die ermittelten Oberflächenenergien und einem polaren Anteil lagen im Schnitt bei den Proben I mit 67 mN/m und 24 % und im Schnitt bei den Proben II mit 77 mN/m und 31 %. Die Kontaktwinkel konnten im Schnitt bei den Proben I mit 37° und im Schnitt bei den Proben II mit 14° bestimmt werden. Die höhere Oberflächenenergie nebst höherem polarem Anteil und auch der geringere Kontaktwinkel bei den gemessenen Proben II wirken sich positiv auf die Benetzbarkeit der Oberfläche des Bauteils aus und führen letztendlich zu einer hervorragenden Benetzbarkeit innerhalb der schon vorhandenen Prozesse und Verfahren.

Vor den Untersuchungen wurden die Proben wie folgt in einer alkalischen Spritzentfettung und/oder Reinigung behandelt: - Ridoline C72 (Henkel KGaA) 8 g/l, 70 ± 5 °C, pH 11 für 8 s; - Ridoline^{®} 1340 (Henkel KGaA) 16-20 g/l, 70 ± 5 °C, pH 9,9 für 8 s; - Entsalztes Wasser 70 ± 5 °C, κ ≤ 4 µS/cm für 8 s; - Trocknung im Luftstrom für 8 s.

Weitere Proben I und II, die keine Vorbehandlung (Entfettung) erfahren haben, wurden weiter elektrochemisch untersucht und charakterisiert.

Eine weitere bedeutsame Eigenschaft eines ZM-Überzugs ist der aktive, kathodische Korrosionsschutz. Dabei muss eine ausreichend hohe elektrochemische Potenzialdifferenz zum Stahlsubstrat vorhanden sein, damit sich der Überzug zugunsten des Stahlwerkstoffs opfert. Überraschenderweise hat sich somit herausgestellt, dass die Zinn-Beigabe auch in diesem Kontext eine positive Auswirkung hat.

Mit Hilfe eines IM6 Potentiostaten der Firma Zahner Messtechnik wurden Potentialmessungen durchgeführt. Es wurde eine Dreielektrodenanordnung verwendet. Als Messzelle kam eine EG & G-Messzelle mit einer Messfläche von 19,6 cm² zum Einsatz. Ein 0,1 mol/l Na₂SO₄-Elektrolyten (pH 5,8) wurde verwendet du als Referenzelektrode kam eine Silber-/Silberchloridelektrode mit einer dreimolaren Kaliumchloridlösung als Innenelektrolyt zum Einsatz (+0,209 V (vs. SHE) bei Raumtemperatur). Als Gegenelektrode wurde ein Platinnetz verwendet. Vor jeder Messung erfolgte eine Sauerstoffspülung des Elektrolyten für mindestens 10 Minuten. Während der Messungen wurde die Atmosphäre oberhalb des Elektrolyten mit Sauerstoff gespult. Die Stromdichte-Potential-Messungen wurden von - 1,1 V (vs. SHE) bis - 0,4 V (vs. SHE) mit einer Rate von 5 mV/s aufgenommen. Die Temperatur des Elektrolyten betrug 22°C. Die Messungen an den Proben wurden fünf Mal durchgeführt. Die DIN 50918:2018-09 kam zur Anwendung. Das Ruhepotential konnte bei den Proben I im Schnitt mit - 0,790 V (vs. SHE) und bei den Proben II im Schnitt mit - 0,808 V (vs. SHE) bestimmt werden. Die Proben II weisen somit im Vergleich zu den Proben I ein negativeres Redox-Potential und somit eine höhere Potentialdifferenz zum Stahl auf.

Die aus den Messungen abgeleiteten Korrosionsstromdichten lagen im Schnitt bei den Proben I bei 11 µA/cm² und bei den Proben II bei 9 µA/cm², so dass eine geringe Korrosionsstromdichte bei den Proben II im Vergleich zu den Proben I festgestellt wurde. Daraus kann abgeleitet werden, dass die beteiligten Korrosionsprozesse insgesamt langsamer ablaufen und somit eine höhere Langlebigkeit des Überzugs bei den Proben II gewährleistet ist.

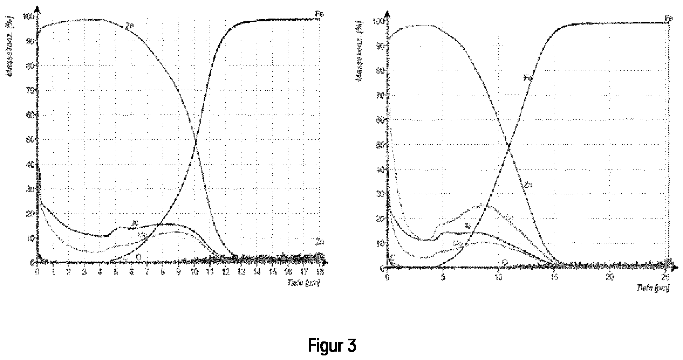

Die **Figur 3** zeigt ein GD-EOS Tiefenprofil des Überzugs an einer der Proben I (links) und an einer der Proben II (rechts). Die Bedingungen lagen bei 20 mA / 800 V / 2,6 hPa, somit standardmäßig und in den Fachkreisen bekannt. Vor der Messung wurden die Proben mit n-Heptan gereinigt.

## Patentansprüche

1. Kalt geformtes Bauteil, bestehend aus einem Stahlsubstrat mit einem zinkbasierten Überzug, welcher Aluminium zwischen 0,5 und 8,0 Gew.-%, Magnesium zwischen 0,5 und 8,0 Gew.-% und Rest Zink und unvermeidbare Verunreinigungen umfasst, wobei der Überzug ein Gefüge aus Zinkkörnern mit eutektischen Phasen aufweist, **dadurch gekennzeichnet, dass** im Überzug zusätzlich Zinn zwischen 0,1 und 2,0 Gew.-% enthalten ist.

2. Bauteil nach Anspruch 1, wobei im Überzug mindestens 0,5 Gew.-% Zinn enthalten ist.

3. Bauteil nach einem der vorhergehenden Ansprüche, wobei im Überzug jeweils mindestens 0,8 Gew.- % Aluminium und Magnesium enthalten sind.

4. Bauteil nach einem der vorhergehenden Ansprüche, wobei im Überzug mindestens 95 Gew.-% Zink enthalten ist.

5. Bauteil nach einem der vorhergehenden Ansprüche, wobei Zink mit maximal 86 Gew.-% in den eutektischen Phasen gebunden ist.

6. Bauteil nach einem der vorhergehenden Ansprüche, wobei das Bauteil einen Kontaktwinkel von weniger als 25° aufweist, ermittelt nach DIN 55660-2:2011-12.

7. Bauteil nach einem der vorhergehenden Ansprüche, wobei das Bauteil eine Oberflächenenergie von mindestens 60 mN/m und einen polaren Anteil an der Oberflächenenergie mit mindestens 20 % aufweist, ermittelt nach DIN 55660-2:2011-12.

8. Bauteil nach einem der vorhergehenden Ansprüche, wobei das Bauteil ein Ruhepotential von gleich oder weniger als -0,795 V (vs. SHE) aufweist, ermittelt nach DIN 50918:2018-09 in einem 0,1 mol/l Na₂SO₄-Elektrolyten mit einem pH-Wert zwischen 4 und 6.

9. Bauteil nach einem der vorhergehenden Ansprüche, wobei das Bauteil ein Korrosionspotential von gleich oder weniger als -0,80 V (vs. SHE) aufweist, ermittelt nach DIN 50918:2018-09 in einem 0,1 mol/l Na₂SO₄-Elektrolyten mit einem pH-Wert zwischen 4 und 6.

10. Verwendung eines Bauteils nach einem der vorhergehenden Ansprüche im Automobilbau.

11. Verwendung eines Bauteils nach einem der Ansprüche 1 bis 9 als Außenhaut eines Automobils.
